# EUROPÄISCHE PATENTSCHRIFT

(11) **EP 0 708 936 B1**
(45) Veröffentlichungstag und Bekanntmachung des Hinweises auf die Patenterteilung: **19.03.1997**
(21) Anmeldenummer: 94920382.2
(22) Anmeldetag: 06.07.1994
(51) Int. Cl.: G05B 13/02

(54) **ANORDNUNG ZUR MODELLIERUNG EINES NICHTLINEAREN PROZESSES**
ARRANGEMENT FOR MODELLING A NON-LINEAR PROCESS
SYSTEME PERMETTANT DE MODELISER UN PROCESSUS NON LINEAIRE

(30) Priorität: 13.07.1993 DE 4323439
(43) Veröffentlichungstag der Anmeldung: 01.05.1996
(73) Patentinhaber: SIEMENS AKTIENGESELLSCHAFT, 80333 München (DE)
(72) Erfinder: LINZENKIRCHNER, Edmund, D-76344 Eggenstein-Leopoldshafen (DE)
(86) Internationale Anmeldenummer: DE9400776
(87) Internationale Veröffentlichungsnummer: WO9502855

(56) Entgegenhaltungen:
- PROCEEDINGS OF THE 1992 AMERICAN CONTROL CONFERENCE, Bd.1, Juni 1992, CHICAGO US Seiten 475 - 479 M.A. KRAMER, M.L. THOMPSON AND P.M. BHAGAT 'EMBEDDING THEORETICAL MODELS IN NEURAL NETWORKS'
- SECOND IEEE INTERNATIONAL CONFERENCE ON FUZZY SYSTEMS, Bd.1, April 1993, SAN FRANCISCO US Seiten 321 - 326 B. FREISLEBEN AND T. KUNKELMANN 'COMBINING FUZZY LOGIC AND NEURAL NETWORKS TO CONTROL AN AUTONOMOUS VEHICLE'
- PROCEEDIGS OF THE 1992 AMERICAN CONTROL CONFERENCE, Bd.3, Juni 1992, CHICAGO US Seiten 1917 - 1921 D.C. PSICHOGIOS AND L.H. UNGAR 'PROCESS MODELING USING STRUCTURED NEURAL NETWORKS'
- NEURAL NETWORKS, Bd.6, Nr.4, 1993, ELMSFORD US Seiten 485 - 497 H. GOMI AND M. KAWATO 'RECOGNITION OF MANIPULATED OBJECTS BY MOTOR LEARNING WITH MODULAR ARCHITECTURE NETWORKS'

## Beschreibung

Die Erfindung betrifft eine Anordnung zur Modellierung eines nichtlinearen Prozesses mit mindestens einer Eingangsgröße und mindestens einer Ausgangsgröße, mit einem neuronalen Netz.

Wie z. B. aus dem Buch von Eberhard Schöneburg, Nikolaus Hansen und Andreas Gawelczyk "Neuronale Netzwerke", erschienen 1990 im Markt & Technik Verlag, bekannt ist, können mit neuronalen Netzen komplexe nichtlineare Funktionen mit vielen Ein- und Ausgangsgrößen durch Trainieren auf der Basis von Lerndaten nachgebildet werden. Diese Fähigkeit kann genutzt werden, um aus Meßdaten, die von einem Prozeß gewonnen wurden, das statische, nichtlineare Verhalten des Prozesses zu modellieren. Man erhält auf diese Weise ein Prozeßmodell, das durch die nichtlineare Ausgabefunktion des neuronalen Netzes realisiert ist und zur Verbesserung der Prozeßführung in einem Regelkreis eingesetzt werden kann. Bei der Meßdatenerfassung am realen Prozeß tritt allerdings das Problem auf, daß meistens nicht alle möglichen Prozeßzustände durchfahren werden können. Die Ausgabedaten und damit auch die vom neuronalen Netz gelernte Funktion haben deshalb auch nur in den Betriebszuständen Gültigkeit, für die ausreichend viele Meßdaten vorliegen. Treten nun im laufenden Betrieb neue Prozeßzustände auf, dann können unvorhersehbare Eingriffe in den Prozeß zu kritischen oder sogar unzulässigen Zuständen führen, wenn das neuronale Netz zur Prozeßregelung/-steuerung eingesetzt wird.

Weiterhin ist aus dem Artikel von M.A.Kramer et. al ,"EMBEDDING THEORETICAL MODELS IN NEURAL NETWORKS", aus den PROCEDINGS OF THE 1992 AMERICAN CONTROL CONFERENCE, Band.1, Chicago, Seiten 475 bis 479, eine Anordnung zur Modellierung eines nichtlinearen Prozesses bekannt, in dem je nach Bereich der Eingangsgrößen entweder ein Fuzzy System oder ein neuronales Netz für die Modellierung zuständig ist.

Der Erfindung liegt die Aufgabe zugrunde, eine verbesserte Anordnung zur Modellierung eines nichtlinearen Prozesses durch ein neuronales Netz zu schaffen.

Zur Lösung dieser Aufgabe weist die neue Anordnung die in Anspruch 1 genannten Merkmale auf.

Die Eingangssignale des neuronalen Netzes werden auf Verlassen des durch die Meßdaten abgedeckten ersten Teils des Wertebereichs der Eingangsgrößen überwacht. Das Ansprechen dieser Überwachung kann dann dazu verwendet werden, auf eine andere Einrichtung zur Vorgabe von unkritischen Funktionswerten der Ausgangsgrößen umzuschalten. In einer alternativen Realisierungsmöglichkeit trainiert das neuronale Netz sowohl die in dem ersten Teil vorliegenden Meßdaten als auch die im zweiten Teil vorgegebenen Werte der Ausgangsgrößen, um dann im gesamten Wertebereich der Eingangsgrößen unkritische Werte für die Ausgangsgrößen ausgeben zu können.

Die Erfindung hat den Vorteil, daß Meßdaten lediglich in einem mit vertretbarem Aufwand realisierbaren Bereich von Prozeßzuständen erfaßt werden müssen und in dem übrigen Bereich unkritische Werte für Ausgangsgrößen erzeugbar sind, wobei auch Erfahrungswissen über die weiteren Prozeßzustände eingebracht werden kann. Die Funktion der Anordnung ist daher nicht auf die am realen Prozeß gemessenen Zustände begrenzt.

Anhand der Figuren, in denen ein Ausführungsbeispiel der Erfindung dargestellt ist, werden im folgenden die Erfindung sowie Ausgestaltungen und Vorteile näher erläutert.

Es zeigen:
- Figur 1: eine Anordnung mit einem neuronalen Netz und einem Fuzzy-System,
- Figur 2: ein Diagramm der Auftrittshäufigkeiten von Werten der Eingangsgrößen x1 und x2 eines realen Prozesses,
- Figuren 3 und 4: daraus abgeleitete Zugehörigkeitsfunktionen für die Eingangsgrößen x1 und x2 und
- Figuren 5 und 6: die Diagramme nach den Figuren 3 und 4, ergänzt um weitere Zugehörigkeitsfunktionen.

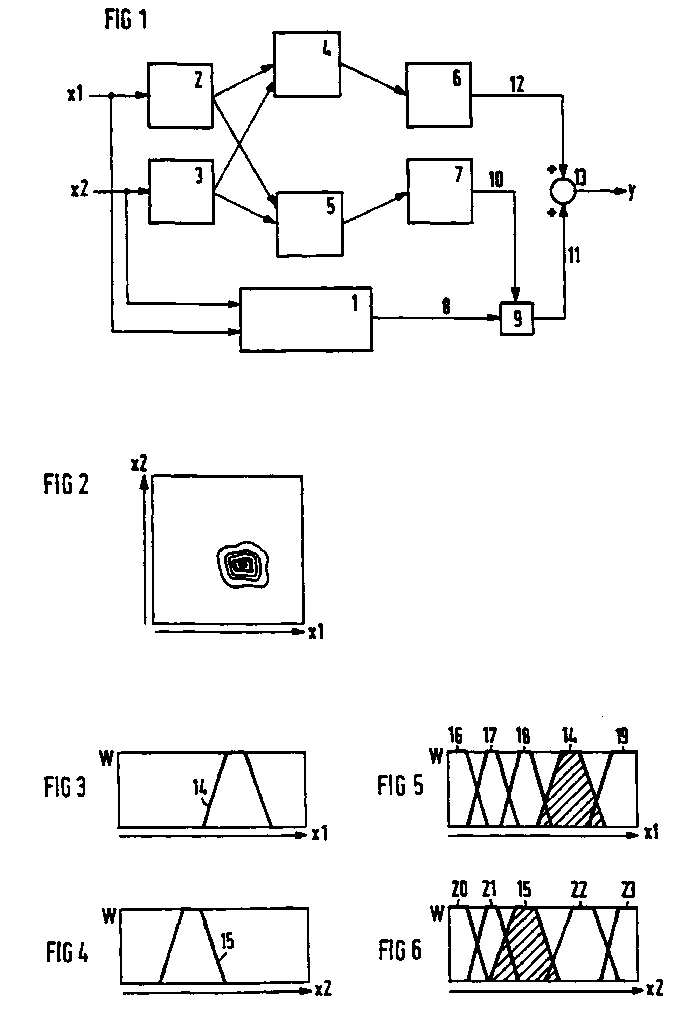

In Figur 1 sind ein Fuzzy-System und ein trainiertes neuronales Netz 1 miteinander kombiniert. Das Fuzzy-System enthält zwei Fuzzifizierungsbausteine 2 und 3 für Eingangsgrößen x1 bzw. x2 sowie Bausteine 4 und 5 eines Regelwerks, denen Defuzzifizierungsbausteine 6 und 7 nachgeschaltet sind. In das Fuzzy-System sind neben den Regeln für die eigentliche Nachbildung des Prozesses in dem Teil des Wertebereichs der Eingangsgrößen x1 und x2, in dem keine Meßdaten vorliegen, auch solche Regeln integriert, die das neuronale Netz 1 ausschalten oder sein Ausgangssignal 8 abschwächen. Dazu ist ein steuerbares Tor 9 vorgesehen, das mit einem Ausgangssignal 10 des Defuzzifizierungsbausteins 7 angesteuert wird. Das Tor 9 schließt sich also gerade dann, wenn der aktuelle Prozeßzustand den Bereich verläßt, für den das neuronale Netz 1 trainiert wurde. Ein Ausgangssignal y wird in der Anordnung nach Figur 1 durch Überlagerung eines Ausgangssignals 11 des steuerbaren Tores 9 und eines Ausgangssignals 12 des Defuzzifizierungsbausteins 6 in einem Summationsglied 13 gebildet.

Anhand der Figuren 2 bis 6 soll im folgenden ein Verfahren zum Entwurf einer Anordnung nach Figur 1 beschrieben werden. Die Meßdaten, die zum späteren Trainieren des neuronalen Netzes verwendet werden sollen, werden durch Meßwerterfassung von dem realen Prozeß gewonnen und als geordnete Datensätze mit jeweils sämtlichen zeitgleich abgetasteten Werten der Ein- und Ausgangsgrößen abgelegt. Insbesondere wenn keine detaillierten Kenntnisse über die interne Struktur des Prozesses vorliegen, werden bei der Meßwerterfassung möglichst viele Prozeßgrößen berücksichtigt. Dabei können auch solche Eingangssignale miterfaßt werden, die zur Bildung der gewünschten Ausgangssignale nicht relevant oder redundant sind. Um solche Eingangssignale vor der weiteren Auswertung auszuschließen, können Datenanalyseverfahren, z. B. eine Korrelationsrechnung oder ein Trainieren und Vergleichen von Netzen jeweils unter Weglassen von Eingängen, auf die Datensätze angewendet werden. Durch Korrelationen von Eingangssignalen untereinander bzw. von Ein- und Ausgangssignalen kann festgestellt werden, welche Eingangssignale gleiche Nutzinformationen enthalten und welche eine Wirkung auf Ausgangssignale haben. Erkennt man z. B., daß ein Eingangssignal keine Wirkung auf die Ausgangssignale hat, dann muß es im weiteren nicht mehr berücksichtigt werden. Eine weitere Möglichkeit zur Reduktion von Eingangssignalen ist das mehrfache Training von neuronalen Netzen, wobei jeweils eines der Eingangssignale weggelassen wird.

In Figur 2 ist ein anhand der Datensätze ermitteltes Höhenliniendiagramm für die Auftrittshäufigkeit von Wertepaaren der Eingangsgrößen x1 und x2 dargestellt. In Bereichen hoher Auftrittshäufigkeiten kann beim Trainieren des neuronalen Netzes mit einer guten Nachbildung des Prozesses gerechnet werden. Sie bilden einen ersten Teil des Wertebereichs der Eingangsgrößen x1 und x2, in dem eine ausreichende Anzahl von Meßdaten vorliegt. In einem zweiten Teil dagegen, der sich außerhalb der gezeigten Höhenlinien befindet, sind keine Meßdaten vorhanden. Für jede einzelne Eingangsgröße ergeben sich aus den Meßdaten Häufigkeitsverteilungen, deren Verlauf prinzipiell den in den Figuren 3 und 4 dargestellten Zugehörigkeitsfunktionen 14 und 15 für die Eingangsgrößen x1 bzw. x2 entspricht. An den Abszissen sind die Wertebereiche der Eingangsgrößen x1 bzw. x2, an den Ordinaten der Wahrheitswert w aufgetragen. Beide Zugehörigkeitsfunktionen 14 und 15 beschreiben in Verbindung miteinander die in den Meßdaten enthaltenen Prozeßzustände, die durch das neuronale Netz 1 erfaßt werden. In gleicher Weise werden Zugehörigkeitsfunktionen für das Ausgangssignal y (Figur 1) des Prozesses festgelegt.

In einem weiteren Schritt können zu den Zugehörigkeitsfunktionen 14 und 15 weitere Zugehörigkeitsfunktionen 16 ... 19 sowie 20 ... 23 für die Eingangsgröße x1 bzw. die Eingangsgröße x2 gemäß den Figuren 5 und 6 definiert werden. Diese Definition erfolgt erfahrungsbasiert, d. h., die Wertebereiche der einzelnen Größen werden entsprechend den Vorgaben eines erfahrenen Prozeßbedieners in sinnvolle Teilbereiche unterteilt. Dabei erfolgt die Definition der Zugehörigkeitsfunktionen derart, daß jeder mögliche Prozeßzustand durch mindestens eine Zugehörigkeitsfunktion abgedeckt wird. Die Zugehörigkeitsfunktionen 18 und 19 bzw. 21 und 22, die an die durch die Meßdaten entstandenen Zugehörigkeitsfunktionen 14 bzw. 15 angrenzen, sollten sich vorteilhaft mit diesen überlappen, damit ein fließender Übergang gewährleistet ist. Als Sonderfall, der in diesem Ausführungsbeispiel nicht dargestellt ist, können auch durch rechteckige Zugehörigkeitsfunktionen scharf gegeneinander abgegrenzte Teilbereiche definiert werden.

Die Definition von Zugehörigkeitsfunktionen erfolgt in gleicher Weise für die Ausgangsgröße y des Prozesses.

Ausgehend von den nun für alle Prozeßzustände vorhandenen Zugehörigkeitsfunktionen wird das Verhalten des Prozesses in Form von Fuzzy-Regeln für all die Prozeßzustände in den Baustein 4 des Regelwerks (Figur 1) eingebracht, die nicht durch entsprechende Meßdaten erfaßt sind. Als Ergebnis liegt ein Fuzzy-System vor, das für alle nicht vom neuronalen Netz abgedeckten Prozeßzustände ein erfahrungsbasiertes Prozeßmodell realisiert.

Alternativ zu der in Figur 1 dargestellten Anordnung besteht auch die Möglichkeit, mit einem nach dem oben beschriebenen Verfahren erzeugten Fuzzy-System Hilfsdaten zu generieren, mit denen der ursprüngliche Meßdatensatz so ergänzt wird, daß alle Prozeßzustände abgedeckt sind. Mit diesem ergänzten Datensatz kann dann ein neuronales Netz trainiert werden, das auch den mittels des Fuzzy-Systems erweiterten Prozeßzustandsbereich modelliert.

## Patentansprüche

1. Anordnung zur Modellierung eines nichtlinearen Prozesses
- mit mindestens einer Eingangsgröße (x1, x2) und mindestens einer Ausgangsgröße (y) sowie
- mit einem neuronalen Netz (1), dessen Funktion in einem ersten Teil des Wertebereichs der Eingangsgrößen (x1, x2) durch Trainieren von Meßdaten bestimmt wird, die durch Meßwerterfassung von dem Prozeß gewonnen wurden,
- mit einem Fuzzy-System zur Vorgabe von Funktionswerten in einem zweiten Teil des Wertebereichs der Eingangsgrößen (x1, x2), in dem keine Meßdaten zum Trainieren des neuronalen Netzes (1) vorliegen,
dadurch gekennzeichnet, daß in dem Fuzzy-System die Zugehörigkeit der Werte der Eingangsgrößen (x1, x2) zum ersten Teil durch Zugehörigkeitsfunktionen (14, 15) angegeben wird, und daß
- ein steuerbares Tor (9), welches von dem Fuzzy-System gesteuert wird und bei Eingangsgrößen im zweiten Teil des Wertebereichs auf Vorgabe von Funktionswerten durch das Fuzzy-System umschaltet, wobei im zweiten Teil des Wertebereichs der Eingangsgrößen (x1, x2) und im Wertebereich der Ausgangsgrößen (y) weitere Zugehörigkeitsfunktionen (16 ... 23) für linguistische Werte definiert sind und im Regelwerk das Verhalten des Prozesses erfahrungsbasiert durch WENN/DANN-Regeln anhand der linguistischen Werte nachgebildet ist.

## Claims

1. Arrangement for modelling a non-linear process
- having at least one input variable (x1, x2) and at least one output variable (y) and
- having a neuronal network (1), the function of which is determined in a first part of the value range of the input variables (x1, x2) by the training of measured data, which has been obtained by way of measured-value acquisition by the process,
- having a fuzzy system to specify function values in a second part of the value range of the input variables (x1, x2) in which there is no measured data for training the neuronal network (1), characterized in that in the fuzzy system the association of the values of the input variables (x1, x2) with the first part is indicated by way of association functions (14, 15), and in that
- a controllable gate (9) which is controlled by the fuzzy system and, with input variables in the second part of the value range, switches over to the specification of function values by way of the fuzzy system, whereby in the second part of the value range of the input variables (x1, x2) and in the value range of the output variables (y) additional association functions (16 ... 23) for linguistic values are defined and in the control mechanism the performance of the process is simulated based on experience by IF/THEN rules with the aid of the linguistic values.

## Revendications

1. Dispositif de modélisation d'un processus non-linéaire
- comportant au moins une grandeur (x1, x2) d'entrée et au moins une grandeur (y) de sortie ainsi que
- un réseau neuronal (1), dont la fonction est déterminée, dans une première partie de la zone de valeur des grandeurs (x1, x2) d'entrée, par apprentissage de données de mesure, qui ont été obtenues par détection de valeurs de mesure par le processus,
- comportant un système à logique floue destiné à prescrire des valeurs de fonction dans une deuxième partie de la zone de valeur des grandeurs (x1, x2) d'entrée, dans laquelle il n'y a pas de données de mesure pour l'apprentissage du réseau neuronal (1),
caractérisé en ce que
dans le système à logique floue, l'appartenance des valeurs des grandeurs (x1, x2) d'entrée à la première partie est indiquée par des fonctions (14, 15) d'appartenance et
- une porte (9), qui peut être commandée, qui est commandée par le système à logique floue et qui commute, en cas de grandeurs d'entrée dans la deuxième partie de la zone de valeur, sur prescription de valeurs de fonction par le système à logique floue, des fonctions d'appartenance supplémentaires (16 à 23) pour des valeurs linguistiques étant définies dans la deuxième partie de la zone de valeur des grandeurs (x1, x2) d'entrée et dans la zone de valeur des grandeurs (y) de sortie, et le comportement du processus étant reproduit dans l'organe de régulation de manière empirique par des règles SI/ALORS sur la base des valeurs linguistiques.
